Europäisches Patentamt

European Patent Office

Office européen des brevets

(19)

(11) Publication number: **0 132 389**
**A1**

(12) # EUROPEAN PATENT APPLICATION

(21) Application number: **84304941.2**

(22) Date of filing: **19.07.84**

(51) Int. Cl.⁴: **F 16 B 13/13**

(30) Priority: **26.07.83 GB 8320151**

(43) Date of publication of application: **30.01.85**
**Bulletin 85/5**

(84) Designated Contracting States: **BE DE FR GB NL SE**

(71) Applicant: **ITW Limited, ITW House 2A Oxford Road East, Windsor Berkshire (GB)**

(72) Inventor: **Connell, Robert Urquhart, 18 Ashmore Street, Brunswick Victoria 3056 (AU)**
Inventor: **Hewison, George David, 18 Earlsbourne Church Crookham, Aldershot Hants (GB)**

(74) Representative: **Rackham, Stephen Neil et al, GILL JENNINGS & EVERY 53-64 Chancery Lane, London WC2A 1HN (GB)**

(54) Fastener assemblies for use in building construction.

(57) A fastener assembly for fastening an exterior sheet or cladding (4) covering a layer of insulation material (6) comprises a spacer (22) of a deformable plastics material in the form of a tubular body and a screw having a head (10) and a shank (8). The spacer consists of a first portion (24) extending from a first end of the body to an intermediate location (28) along the length of the body, and a second portion (26) extending from the intermediate location (28) to a second end of the body. The first portion (24) is cylindrical and circumferentially continuous and the second portion (26) has an external circumferential groove (36) adjacent the second end and is divided by slots (34) into a plurality of fingers (32) extending from the intermediate location (28) to the second end. The shank (8) of the screw comprises in succession away from the head (10), a larger diameter portion (14), a smaller diameter portion (16), and an intermediate diameter portion (17). The intermediate diameter portion (17) has on it a thread (18) with a thread cutting leading part, and the larger diameter portion (14) is joined to the smaller diameter portion (16) by a taper (15). The combined length of the intermediate (17) and smaller diameter (16) portions of the shank (8) is greater than the length of the spacer (22).

ITW Limited                                    80/2231/02

## Fastener Assemblies For Use In Building Construction

One form of wall construction used in buildings includes an exterior sheet or cladding or rigid material covering a much thicker layer of insulation. The exterior sheet or cladding is then fixed to rails, studs or purlins attached to or forming part of a structural framework or attached to an interior skin of the building. For example the exterior sheet and the rails, studs, purlins or interior skin may be of steel, while the insulation is of untreated glass fibre mat, for example 25 mm thick. Commonly the rails, studs, purlins or interior skin are somewhat thicker than the exterior sheet, and the exterior sheet is secured to them by screw-threaded fastenings which are inserted from the outside and pass through the insulation.

According to the present invention a fastener assembly comprises a spacer of a deformable plastics material in the form of a tubular body consisting of a first portion extending from a first end of the body to an intermediate location along the length of the body, and a second portion extending from the intermediate location to a second end of the body, the first portion being cylindrical and circumferentially continuous and the second portion having an external circumferential groove adjacent the second end and being divided by slots into a plurality of fingers extending from the intermediate location to the second end; and, a screw having a head and a shank, the shank comprising, in succession away from the head, a larger diameter portion, a smaller diameter portion, and an intermediate diameter portion, the intermediate diameter portion having on it a thread with a thread-cutting leading part, and the larger diameter portion being joined to the smaller diameter portion by a taper, the combined length of the intermediate and smaller diameter portions of the shank being greater than the length of the spacer.

In the use of the fastener assembly in accordance with this invention a hole is formed in the exterior sheet and the spacer driven through the hole and into space between the exterior sheet and the rail, stud, purlin or interior skin. The external circumferential groove adjacent the second end of the spacer receives the exterior sheet or cladding and, as the screw is driven through the spacer the larger diameter portion of the shank urges the plurality of fingers radially outwards to lock the exterior sheet into the circumferential external groove adjacent the second end of the spacer. As the screw is finally driven home the spacer resists further axial movement of the screw and movement of the exterior sheet towards the interior of the building, by acting as a tubular strut located between the exterior sheet and the rail, stud, purlin or interior skin. This avoids the overcompression of the insulation located beneath the exterior skin and prevents the over-tightening of the screw causing local depression in the exterior sheet.

Preferably the first portion of the spacer includes an internal projection adjacent to the first end. This internal projection engages the thread on the intermediate diameter portion of the shank of the screw to ensure that the spacer moves with the screw as it is driven through the hole formed in the exterior sheet and continues to move with the screw until the first end of the spacer abuts the rail, stud, purlin or interior skin. Only then does the screw move through the spacer as it is driven further to move the largest diameter portion of the shank of the screw into the inside of the plurality of fingers to urge these radially outwards to lock the exterior sheet into the external circumferential groove adjacent the second end of the spacer. The internal projection adjacent the first end of the spacer enables the fastener to be provided preassembed with the spacer located on the leading end of the screw to enable the fastener assembly to be inserted directly through prepared holes in the exterior sheet.

Preferably the fastener assembly also includes a sealing washer which has a diameter greater than the diameter of the second end of the spacer. The diameter of the head of the screw must also be greater than that of the second end of the spacer or, alternatively, the sealing washer may include a rigid component engageable with the head of the screw and of diameter greater than the second end of the spacer. In both of these cases, in use, the resilient sealing washer is urged by the head of the screw into water-tight engagement with the outer surface of the exterior sheet or cladding and since the second end of the spacer is of smaller diameter it does not interfere with the seal formed between the sealing washer and the outer surface of the exterior sheet. This sealing washer is also preferably preassembled with the screw and the spacer and interposed between the head of the screw and the spacer. The length of the screw from the head to the end of the screw thread on the intermediate diameter portion closest to the head must be less than the overall length of the spacer to ensure that the thread formed on the intermediate diameter portion does not run out of the rail, stud, purlin or interior skin before the head is clamped against the outside face of the exterior sheet. Naturally when a sealing washer is included this occupies part of this portion of the screw shank and, accordingly, under these circumstances it is necessary that the length of the screw between the underside of the sealing washer in its compressed state and the end of the screw thread on the intermediate portion adjacent the thread is less than the length of the spacer.

Preferably the end of the shank of the screw remote from the head is formed as a drilling tip. This obviates the need for a separate drilling operation to be performed to drill a hole in the rail, stud, purlin or interior skin when installing a fastener assembly in accordance with this invention. Of course it is still necessary to form a hole in the exterior sheet to enable the screw and spacer to be inserted through this hole in the exterior sheet. The thread with the thread-cutting leading part formed on the intermediate diameter portion of the shank of the screw may have a self-tapping thread form and this is particularly preferred when the rail, stud, purlin or interior skin is relatively thin. When the rail, stud, purlin or interior skin is of much heavier gauge and, for example, over 5 mm in thickness the intermediate diameter portion preferably is provided with a machine thread form with a thread cutting leading portion.

Preferably the thread on the larger diameter portion of the shank of the screw is tapered at its leading end which forms the taper linking the smaller diameter portion of the shank with the larger diameter portion. This tapering thread acts to bite into the fingers and not only urges them outwards to ensure that the exterior sheet is engaged by the external circumferential groove on the spacer but also acts partly as a nut to clamp the exterior skin against the head of the screw, or the sealing washer tightly. This helps avoid any loss of tightness caused by creep or plastic deformation of the spacer with time. Alternatively the larger diameter portion of the screw may be plain and unthreaded with a conical lead-in or the larger diameter portion may be provided by a series of rings or circumferentially extending ribs which again taper towards the smallest diameter portion of the shank.

An example of a fastener in accordance with this invention and its use in fastening together two metal sheets having a layer of insulation material interposed between them will now be described with reference to the accompanying drawings, in which:-

Figure 1 is an axial section of a spacer, in position in a wall, in conjunction with a screw and a sealing washer (the spacer being in section on the line I-I in Figure 3);

Figure 2 is an axial section through the spacer, on a larger scale than Figure 1 (the section being on the line II-II in Figure 3); and

Figure 3 is an elevation of the head end of the spacer.

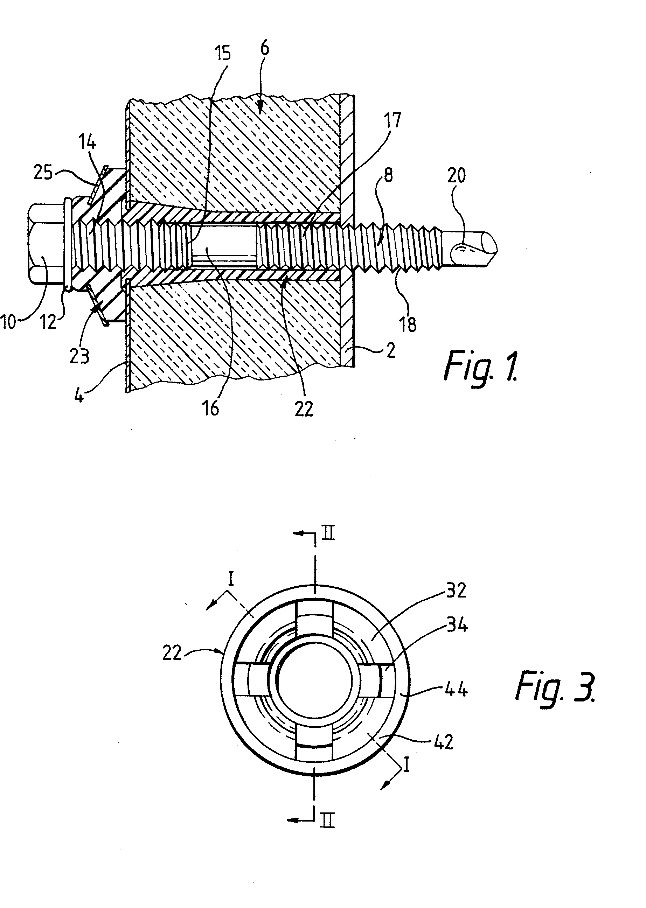

Figure 1 shows a wall of a building consisting of an interior sheet 2, an exterior sheet 4, and insulation 6. The sheet 2 is somewhat thicker than the sheet 4. At intervals of the surface area of the wall, the sheet 4 is secured to the sheet 2 by a screw 8.

Each screw has a driving head 10, a collar 12, a larger diameter threaded portion 14, with a tapered leading part 15, a smaller diameter unthreaded portion 16, an intermediate diameter portion 17 with a screw thread 18 having a tapered leading part, and a drilling tip 20.

A spacer 22 surrounds that part of the screw which lies between the two sheets 2 and 4, and serves the function of preventing localised undesired compression of the insulation 6 when the screw 8 is tightened, as described below.

There is a sealing washer 23 between the collar 12 of the screw and the outer surface of the sheet 4. The body of the washer is of EPDM synthetic rubber, and the washer is reinforced by a frusto-conical metal portion 25.

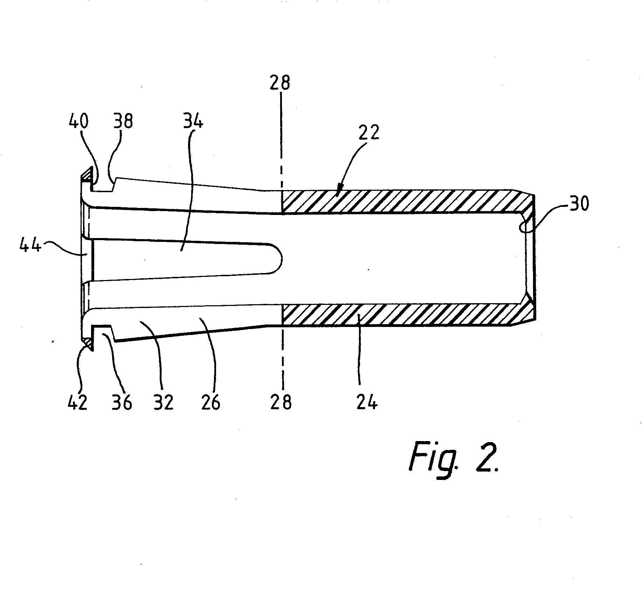

The spacer 22 will now be described in more detail with reference to Figures 2 and 3.

The spacer is made of a deformable plastics material, in this case nylon 66. The spacer is in the form of a tubular body, and consists of a first portion 24 and a second portion 26. The first portion 24 extends from the right hand end of the body (as seen in Figures 2 and 1) to an intermediate location indicated by a line 28, 28. The second portion extends from the line 28, 28 to the left-hand end of the body.

The first portion 24 is cylindrical, and circumferentially continuous. Adjacent to the right-hand end it has an internal projection in the form of an internal circumferential rib 30.

The second portion 26 is divided into four fingers 32 extending from the intermediate location 28 to the left-hand end of the body, the division being by longitudinal slots 34. Adjacent to the left-hand end, the second portion 26 has a circumferential external groove 36. This groove is defined by shoulders 38 and 40. A small flange 42 extends circumferentially continuously around the left-hand end of the spacer, so that the shoulder 40 is extended radially outwards, and the fingers 32 are interconnected by parts of the flange 42 which constitute thin resilient bridges 44.

There are two alternative methods in which the screw, spacer, and washer can be used.

In a first method, the washer 23 and spacer 22 are preassembled with the screw 8, the spacer being pushed onto the screw until the internal rib 30 interlocks with the right-hand part (as seen in Figure 1) of the intermediate diameter thread 18 of the screw. In this condition, the left-hand end of the spacer is abreast of the smaller diameter unthreaded portion 16 of the screw, so that it is possible for the fingers 32 to flex radially inwards towards one another, without such movement being prevented by the screw.

Holes are prepared in the sheet 4, having a diameter corresponding to the diameter of the base of the circumferential groove 36 in the spacer (when the spacer is unstressed). The external diameter of the first portion 24 of the spacer is a clearance fit in the holes.

The tip of the screw, followed by the right-hand end of the spacer, is introduced into one of the holes in the sheet 4, and the sub-assembly of screw, spacer, and washer, is pushed through the insulation 6 until the drilling tip 20 encounters the sheet 2. Then the screw is rotated, while being urged to the right, and in consequence it first drills a hole in the sheet 2, and then taps a thread in that hole and draws itself through the sheet 2 by means of the thread 18.

The interengagement between the internal rib 30 on the spacer and the thread 18 is sufficiently firm for the screw to draw the spacer with it, while the left-hand end of the spacer is still abreast of the unthreaded portion 16. In this way, the spacer is carried into the position shown in Figure 1, in relation to the sheets 2 and 4, and in particular the fingers 32 flex towards one another as they pass through the hole in the sheet 4, until the circumferential groove 36 comes abreast of the sheet 4, whereupon the fingers spread apart, as a result of the resilience of the fingers themselves, and of the bridges 44, so that the shoulder 38 engages the right-hand surface of the sheet 4. At the same time, the leading end of the spacer reaches the sheet 2.

Continued rotation of the screw 8 causes the screw to advance longitudinally through the sheet 2 and through the spacer, whereupon the larger-diameter thread 14 enters between the fingers 32, thus positively holding the fingers apart. The screw continues to progress to the right (as seen in Figure 1) until the washer 23 has become clamped between the collar 12 and the sheet 4, whereupon the spacer 22 resists further axial movement of the screw, by acting as a tubular strut between the sheets 4 and 2.

In conjunction with the provision of the shoulder 38, the second portion 26, when unstressed, is tapered externally, increasing in diameter from the intermediate location 28, 28 to the shoulder 38.

To enable the fingers to flex inwards a sufficient distance as the spacer passes through the hole in the sheet 4, the second portion 26, when unstressed, is also tapered internally, increasing in diameter from the intermediate location to the left-hand end. However, in order to provide strength at the base of the groove 36, the internal taper is less than the external taper.

In addition, the shoulder 38 is slightly inclined relatively to a plane perpendicular to the axis of the spacer, to facilitate radially outward movement of the fingers when the groove 36 comes abreast of the sheet 4.

In an alternative method, the spacer 22 is not preassembled with the screw 8. Instead, the spacer is first pushed through the hole in the sheet 4 until the groove 36 comes abreast of the sheet 4. Thereafter the screw 8, with a washer 23 already on it, is introduced through the spacer 22, and driven into and through the sheet 2, until the washer 23 and spacer 22 are firmly clamped. If the fastener is to be used in accordance with this second method the internal circumferential rib 30 at the leading end of the first portion of the spacer 22 need not be included.

In both methods, especially the second, the presence of the shoulder 40 and the flange 42 ensures that there is no risk of the spacer 22 passing completely through the sheet 4.

In the example shown, the thread on the larger diameter portion cuts a shallow mating thread in the innter faces of the fingers 32. As a result, the spacer, with its shoulder 38, acts somewhat as a nut, so that the washer 23 and sheet 4 are securely clamped between the head 10 and the shoulder 38. Nevertheless, if this nut action is not required, then the larger diameter threaded portion 14 of the screw can be replaced by a larger diameter unthreaded portion with a frusto-conical lead-in.

If the bridges 44 are omitted, then the spacer may be moulded so as to have an unstressed shape in which the fingers are not in their desired final position. THey may for example be closer together at the left-hand end (as seen in Figure 2).

## CLAIMS

1. A fastener assembly comprising a spacer (22) of a deformable plastics material in the form of a tubular body, and a screw having a head (10) and a shank (8), characterised in that the spacer (22) consists of a first portion (24) extending from a first end of the body to an intermediate location (28) along the length of the body, and a second portion (26) extending from the intermediate location to a second end of the body, the first portion (24) being cylindrical and circumferentially continuous and the second portion having an external circumferential groove (36) adjacent the second end and being divided by slots (34) into a plurality of fingers (32) extending from the intermediate location (28) to the second end; and, in that the screw shank (8) comprises, in succession away from the head, (10) a larger diameter portion (14), a smaller diameter portion (16), and an intermediate diameter portion (17), the intermediate diameter portion (17) having on it a thread (18) with a thread cutting leading part, and the larger diameter portion (14) being joined to the smaller diameter portion by a taper (15), the combined length of the intermediate (17) and smaller diameter (16) portions of the shank (8) being greater than the length of the spacer (22).

2. A fastener assembly according to claim 1, in which the first portion (24) of the spacer (22) includes an internal projection (30) adjacent the first end, in use the internal projection (30) engaging the thread (18) on the intermediate diameter portion (17) of the screw to ensure that the' spacer (22) initially moves with the screw.

3. A fastener assembly according to claim 1 or claim 2, which also includes a sealing washer (23) which has a diameter greater than the diameter of the second end of the spacer (22).

4. A fastener assembly according to claim 3, in which the sealing washer (23) includes a rigid component to spread the load exerted by the head (10) of the screw and of a diameter greater than the second end of the spacer (22).

5. A fastener assembly according to any one of the preceding claims, in which the length of the screw from the head (10) to the end of the screw thread (18) on the intermediate diameter portion (17) closest to the head (10) is less than the overall length of the spacer (22).

6. A fastener assembly according to any one of the preceding claims, in which the end of the shank (8) of the screw remote from the head (10) is formed as a drilling tip (20).

7. A fastener assembly according to any one of the preceding claims, in which the thread on the larger diameter portion (14) of the shank (8) of the screw is tapered at its leading end and this forms the taper linking the smaller diameter portion (16) of the shank (8) with the larger diameter portion (14).

0132389

1/2

Fig. 1.

Fig. 3.

Fig. 2.

0132389

# EUROPEAN SEARCH REPORT

**European Patent Office**

Application number

EP 84 30 4941

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | EP-A-0 074 469 (A. BÖHL SCHRAUBEN- UND KUNSTSTOFFWERK) * Figure 1 * | 1 | F 16 B 13/13 |
| Y | DE-B-1 202 581 (OXLEY) * Figure 1 * | 1 | |
| Y | DE-A-2 627 746 (ETS. VAPE) * Figures 1, 2 * | 1,7 | |
| Y | DE-A-2 721 911 (ILLINOIS TOOL WORKS) * Figure 11 * | 1,6,7 | |
| Y | DE-A-1 400 815 (FA. A. FISCHER) * Figure 2 * | 1 | **TECHNICAL FIELDS SEARCHED (Int. Cl. 3)** |
| Y | DE-U-7 932 608 (FÄSTER) * Figure 1 * | 1 | F 16 B 13/00 E 04 B 1/60 |
| A | | 2 | |
| Y | CH-A- 408 540 (FISCHER) * Figure 1 * | 1 | |
| Y | DE-A-2 636 491 (ILLINOIS TOOL WORKS) * Figure 7 * | 6 | |

The present search report has been drawn up for all claims

| Place of search BERLIN | Date of completion of the search 17-09-1984 | Examiner ZAPP E |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82